Europäisches Patentamt

European Patent Office

Office européen des brevets

(19)

(11) Veröffentlichungsnummer: **0 311 828**
**A2**

(12) # EUROPÄISCHE PATENTANMELDUNG

(21) Anmeldenummer: **88115763.0**

(22) Anmeldetag: **24.09.88**

(51) Int. Cl.⁴: **A44B 11/12**

(30) Priorität: **16.10.87 DE 3735094**

(43) Veröffentlichungstag der Anmeldung:
**19.04.89 Patentblatt 89/16**

(84) Benannte Vertragsstaaten:
**AT BE CH FR GB IT LI NL SE**

(71) Anmelder: **Dolezych, Udo**
**Im Grund 26**
**D-5804 Herdecke(DE)**

(72) Erfinder: **Dolezych, Udo**
**Im Grund 26**
**D-5804 Herdecke(DE)**

(54) **Ratsche zum Spannen insbesondere von Zurrgurten.**

(57) Die Erfindung betrifft eine Ratsche zum Spannen insbesondere von Zurrgurten, mit einem Rahmenteil mit einem Paar üblicherweise zu beiden Seiten eines mit diesen einstückig ausgebildeten Brückenelementes im Abstand angeordneter Seitenwangen mit Bohrungen zur drehbeweglichen Lagerung einer einerseits mit einem schwenkbaren Antriebshandhebel und andererseits mit einem Klinkenradgesperre zusammenwirkenden Gurtaufwickelwelle mit Schlitz, wobei jede Lagerbohrung nach oben-außen zu mit einer teilkreisförmigen Führungskulisse für eine im Antriebshandhebel verschieblich angeordnete Mitnehmerklinke ausgebildet und im Rahmenteil eine ebenfalls verschieblich angeordnete Rücklauf-Sperrklinke vorhanden ist,
**dadurch gekennzeichnet,**
daß die Seitenwangen (1a, 1b) ohne Anordnung des einstückigen Brückenelementes durch wenigstens zwei mit den Seitenwangen (1a, 1b) mehrstückig ausgebildete abstandshaltende Elemente (2, 3) miteinander zum Rahmenteil (10) starr verbunden sind.

FIG.1

EP 0 311 828 A2

## Ratsche zum Spannen insbesondere von Zurrgurten

Die Erfindung betrifft eine Ratsche zum Spannen insbesondere von Zurrgurten, mit einem Rahmenteil mit einem Paar üblicherweise zu beiden Seiten eines mit diesen einstückig ausgebildeten Brückenelementes im Abstand angeordneter Seitenwangen mit Bohrungen zur drehbeweglichen Lagerung einer einerseits mit einem schwenkbaren Antriebshandhebel und andererseits mit einem Klinkenradgesperre zusammenwirkenden Gurtaufwickelwelle mit Schlitz, wobei jede Lagerbohrung nach oben-außen zu mit einer teilkreisförmigen Führungskulisse für eine im Antriebshandhebel verschieblich angeordnete Mitnehmerklinke ausgebildet und im Rahmenteil eine ebenfalls verschieblich angeordnete Rücklauf-Sperrklinke vorhanden ist.

Eine Ratsche der eingangs genannten Art wird beim Stand der Technik auch als Spannschloß für Gurtbänder bezeichnet.

Eine Spannvorrichtung bzw. Ratsche bzw. Spannschloß der vorstehend genannten Art ist beispielsweise aus der US-PS 41 99 182 bekannt.

Bei der bekannten Vorrichtung ist den Sperrzähnen des Klinkenrades ein Gesperre zugeordnet, welches aus einer einzelnen Sperrklinke besteht. Die Zahl der Zähne von Klinkenrädern ist, wie aus dieser Vorveröffentlichung hervorgeht, aus Festigkeitsgründen begrenzt. Sie beträgt üblicherweise 11 (elf) und entspricht somit einer Zahnteilung mit einem Winkel von ca. 33°.

Ein Teilungswinkel dieser Größe verhindert es vielfach, die durch Betätigung mittels Handkraft des als Antriebsorgan angeordneten Handhebels erreichbare möglichst große Spannkraft im Zurrgurt auch tatsächlich zu erreichen, weil bis zum Einrasten der Sperrklinke in den äußerst erreichbaren Sperrzahn des Sperrades noch ein so großer Bewegungsschritt erforderlich wäre, welcher die verfügbare Handkraft des Benutzers weit überfordert. Hierbei kann dann nur in den in Antriebsdrehrichtung weiter zurückstehenden Sperrzahn eingerastet werden, wobei im ungünstigsten Falle ein Nachlassen des Klindenrades und somit der erreichbaren Gurtspannung durch die Wickelwelle bis annähernd des Bewegungsschrittes eines Zahnwinkels erfolgt. Das maximal erreichbare Spannungsmoment wird daher weit unterschritten.

Eine Spannvorrichtung der eingangs genannten Art ist weiterhin aus der DE-PS 32 03 750 bekannt.

Das Spannschloß besteht bei dieser bekannten Vorrichtung ebenso wie auch bei einer Vielzahl ähnlicher im Stand der Technik bekannter und handelsüblicher Ratschen bzw. Spannschlösser aus einem Rahmen in Form eines U-förmig gekanteten Profilbleches mit einer relativ kurzen Basis und zwei nach vorne und rückwärts über diese vorstehenden U-Schenkeln, in deren eines Ende über miteinander fluchtende Bohrungen ein Steg oder Bolzen eingesetzt ist, der üblicherweise unter Zwischenlage eines Abstandshalter-Röhrchens zwischen den Schenkeln durch Verschraubung oder Vernietung die beiden Schenkel miteinander im Abstand parallel verbindet.

Bei der bekannten Gurtratsche bzw. Spannschloß bildet dieser Bolzen an einem Ende des Rahmens einen Gurtanschluß für ein mit einer Schlaufe konfektioniertes Gurtende.

Am anderen Ende ist dann der mit einer U-förmigen Brücke ausgebildete Rahmen mit fluchtenden Lagerbohrungen für die geschlitzte Gurtaufwickelwelle versehen, in die ein schlaufenfreies Gurtende eingeführt und durch Aufwickeln auf die Wickelwelle zunächst befestigt und im weiteren gespannt wird.

Nachteilig bei dieser allgemein üblichen und in der Praxis als Standard eingeführten Bauweise ist, daß die Einspannrichtung der Ratsche im Gurtverlauf durch die vorgenannte Anordnung der Gurtanschlüsse in der Weise fest gelegt ist, daß in jedem Falle das schlaufenfreie Gurtende an dem die Wickelwelle aufweisenden Ende des Rahmens und das mit einer Schlaufe versehene Ende mit dem entgegengesetzten Ende des Rahmenteils verbunden werden muß. Eine Umkehr des Ratschenkörpers ist somit bei der bekannten Bauart der Ratsche nicht möglich.

Somit kann der Fall eitreten, daß beim Niederzurren eines Stückgutes der Antriebshebel im Zusammenwirken mit dem Klinkenradgesperre sich in einer ergonomisch ungünstigen Position befindet. Denn: Je nachdem, in welcher Position sich die Zurrmittel, Gurte, deren Anschlagpunkte am Fahrzeug und die Ratsche, im Verhältnis zur Position einerseits des zu zurrenden Gutes und/oder andererseits zur Position der handhabenden Person befinden, kann diese z. B. auf Straßenebene stehend die Ratsche oberhalb Kopfhöhe auf dem Fahrzeug im Stehen mit erhobenen Händen ergonomisch besser niederziehend, oder, z. B. auf der Pritsche stehend, aus einer Rumpfbeugung ergonomisch besser den Hebel hochziehend betätigen.

Die Verwendung einer in ihrer Zuordnung zu den unterschiedlichen Gurtenden nicht-umkehrbaren Ratsche führt somit zwangsläufig zu ergonomisch ungünstigen Situationen. Hierdurch können sich beim Niederzurren erhebliche Probleme ergeben, weil die erforderliche Zurrspannung nicht erreicht wird.

Der Erfindung liegt ausgehend vom genannten Stand der Technik die Aufgabe zugrunde, eine Ratsche der in Betracht gezogenen Art derart zu verbessern, daß sie bei allen vorkommenden Anwendungsfällen eine ergonomisch optimale Betätigung zur Erreichung höchstmöglicher Spannkraft ermöglicht, indem diese wahlweise immer so an die Gurtenden anschließbar ist, daß eine Betätigung stets unter Einsatz möglichst des vollen Körpergewichtes erfolgen kann.

Weiterhin soll die Erreichung möglichst hoher Spannkräfte auch dadurch noch weiter verbessert werden, daß anstelle des bisher üblichen Zahnteilungswinkels von etwa 33° ein wesentlich geringerer Zahnteilungswinkel beim Klinkenradgesperre möglich gemacht wird, ohne daß hierdurch die erforderliche Festigkeit und/oder Zuverlässigkeit des Gesperres vermindert wird.

Und schließlich bezweckt die Erfindung eine möglichst unkomplizierte Ausgestaltung der Vorrichtung, die sich vorzugsweise zur wirtschaftlichen Herstellung aus Stanzteilen auch für vergleichsweise kleinere bis mittlere Serienstückzahlen in besonderer Weise eigen soll.

Die Lösung der gestellten Aufgabe gelingt mit der Erfindung bei einer Ratsche zum Spannen insbesondere von Zurrgurten der im Oberbegriff genannten Art dadurch, daß die Seitenwangen ohne Anordnung des einstückigen Brückenelementes durch wenigstens zwei mit den Seitenwangen mehrstückig ausgebildete abstandshaltende Elemente miteinander zum Rahmenteil starr verbunden sind.

Mit Vorteil wird durch den Wegfall des beim Stand der Technik allgemein üblichen Brückenelements zwischen den Seitenwangen sowie durch deren Verbindung durch mehrstückig ausgebildete abstandshaltende Elemente die Zugänglichkeit des Einführungsschlitzes der Gurtaufwickelwelle wesentlich und somit derart verbessert, daß ein schlaufenfreies Gurtende ohne Schwierigkeit von jedem der beiden Enden des Rahmenteils bzw. der Seitenwangen in den Schlitz der Wickelwelle eingeführt werden kann.

Damit bietet sich mit der Erfindung erstmalig die Möglichkeit, die Gurtratsche zwischen einem schlaufenfreien Gurtende und einem Gurtende mit Schlaufe unabhängig von deren Anordnung in jedem Falle so anzuschließen, daß der Antriebshebel im Zusammenwirken mit dem Klinkenradgesperre in einer ergonomisch günstigen Stellung vorliegt, die es dem Benutzer gestattet, beim Betätigen des Antriebshebels sein volles Körpergewicht und zusätzlich noch seine Muskelkraft eizusetzen.

Der Wegfall eines beim Stand der Technik zwischen den Seitenwangen üblichen Brückenelements ergibt aber auch eine signifikante Verringerung des bei der Herstellung erforderlichen Werkzeugaufwandes für die entsprechenden Stanzteile. Beispielsweise werden für die erfindungsgemäße Ausgestaltung des Rahmenteils nurmehr zwei identisch gleiche Seitenwangenstanzteile benötigt, die mit vergleichsweise geringem Materialverschnitt aus einem Bandmaterial ausgestanzt werden. Mit der Verringerung der Zuschnittsfläche wird aber nicht nur das Werkzeug kleiner und damit preisgünstger, sondern es wird auch der Schnittdruck verringert und somit eine wesentlich kleinere Stanzpresse benötigt, deren Betriebskosten ebenfalls geringer sind. Gleichzeitig arbeiten solche kleineren Pressen mit vergleichsweise sehr viel schnelleren Arbeitstakten, sodaß auch von daher die Ausbringungskosten verringert werden.

Durch die erfindungsgemäße Ausgestaltung werden somit auch außer der Verbesserung im Anwendungsbereich noch Herstellkosten gespart und es ergibt sich die Möglichkeit einer sehr wirtschaftlichen Fertigung auch bei kleineren oder mittleren Herstellungs-Losgrößen.

Weitere Verbesserungen des Erfindungsgegenstandes ergeben sich durch Ausgestaltungen im Detail entsprechend den Merkmalen der Ansprüche 2 bis 11.

Dabei ist für die freie Wahl der Einspannrichtung der Ratsche zwischen zwei Gurtenden mit unterschiedlicher Endausstattung von erfindungswesentlicher Bedeutung, daß die Seitenwangen an beiden Enden Verbindungsbolzen aufweisen, sowie, daß unterhalb eines jeden Verbindungsbolzens jeweils ein zweiter Bolzen unter Bildung eines Führungsschlitzes für den Gurt angeordnet ist, und zwar im parallelen Abstand.

Von erfindungswesentlichem Vorteil im Zusammenwirken mit den vorgenannten Merkmalen ist ferner die Ausgestaltung des Sperrades des Klinkenradgesperres, bei welchem das Durchmesserverhältnis von Hüllkreis zum Fußkreis der Zähne zwischen 1,10 und 1,20 und vorzugsweise 1,16666 beträgt.

Hierdurch wird ermöglicht, daß der Winkelabstand von Zahn zu Zahn zwischen 15 und 18 Winkelgrade beträgt, während er - wie erwähnt - beim Stand der Technik üblicherweise bei etwa 33° liegt.

Ermöglicht wird diese engere Zahnteilung durch eine Vergrößerung der Zähnezahl auf 24 bzw. 20 Zähne beim Sperrad, und zwar einerseits durch eine Vergrößerung des Sperrad-Durchmessers, welche dadurch erreicht wird, daß gemäß Anspruch 9 des Erfindungsgegenstandes der Mittelpunkt der Lagerbohrung der Wickelwellenlagerung auf einer Linie x-x angeordnet ist, die im wesentlichen in Höhe der Oberkante der Seitenwange verläuft.

Eine weitere erfindungswesentliche Verbesserung wird gemäß Anspruch 10 auch dadurch erreicht, daß die Führungskulisse, welche üblicherweise an einem Ende ihrer teilkreisförmigen Ausbildung eine Rastausnehmung zur Festlegung des Antriebshandhebels in der Neutralstellung bei entriegeltem Gesperre der Wickelwelle mittels der in die Rastausnehmung eingreifbaren Mitnehmerklinke aufweist, erfindungsgemäß auch am anderen Ende ihrer teilkreisförmigen Ausbildung eine zweite Rastausnehmung zur Festlegung des

3

Antriebshandhebels in seiner Antriebs-Endstellung aufweist.

Hierdurch kann der Handhebel in jeder seiner Endlagen festgerastet werden, was in Anbetracht der mit der Erfindung erreichbaren Umkehrbarkeit der Ratsche in der Gurt laufrichtung aus Sicherheitsgründen besonders vorteilhaft ist.

Die Erfindung wird in schematischen Zeichnungen in einer bevorzugten Ausführungsform gezeigt, wobei aus den Zeichnungen weitere vorteilhafte Einzelheiten der Erfindung entnehmbar sind.

Die Zeichnungen zeigen im einzelnen:

Figur 1 ein Ratsche in Seitenansicht,

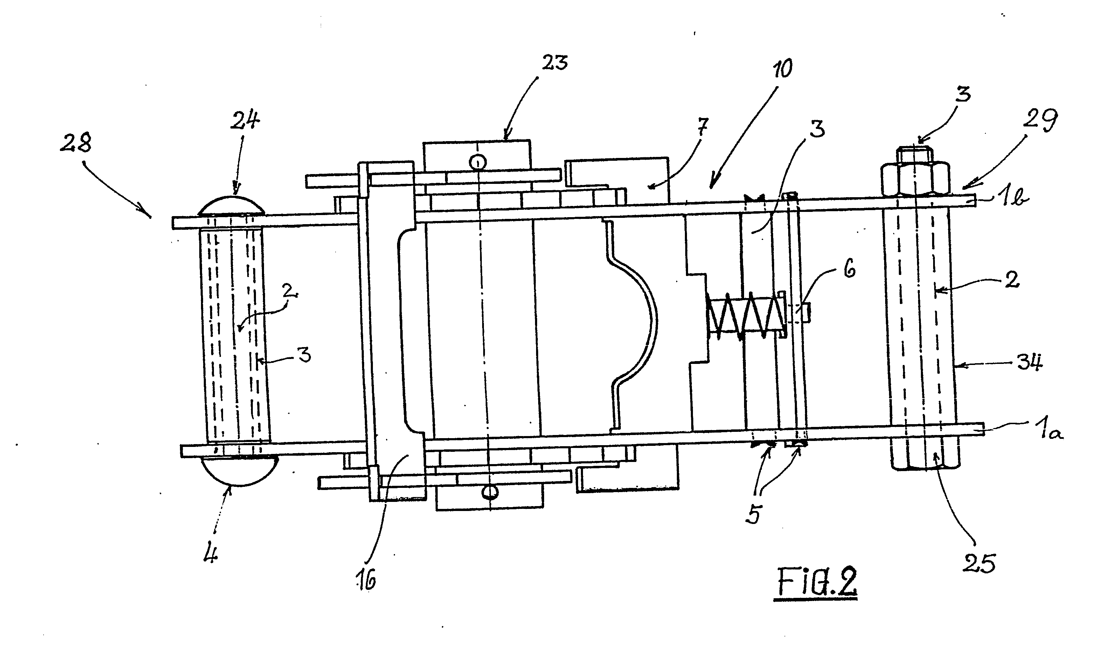

Figur 2 die Ratsche gemäß Fig. 1 in Draufsicht einer Eben II - II in Fig. 1,

Figur 3 eine Seitenansicht einer Seitenwange einer Ratsche gemäß Fig. 1,

Figur 4 ein Sperrad einer Ratsche gemäß Fig. 1, in Seitenansicht.

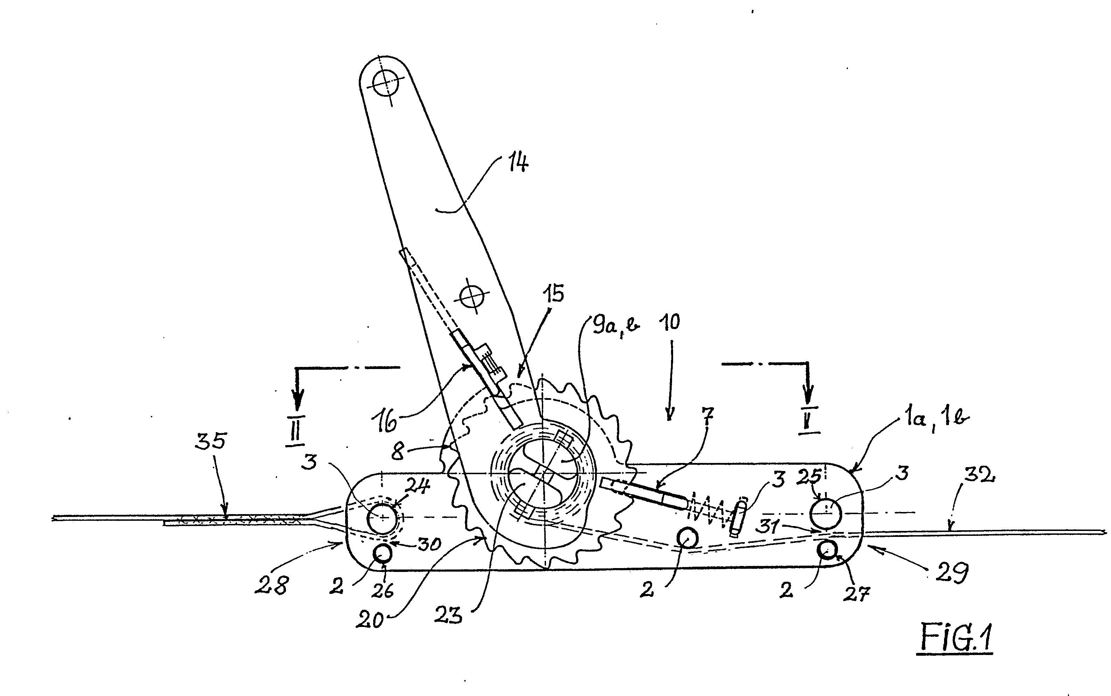

Die in der Figur 1 in Seitenansicht dargestellte Ratsche zum Spannen von Zurrgurten weist ein Rahmenteil 10 auf, welches von einem Paar im Abstand angeordneten Seitenwangen 1a, 1b im wesentlichen gebildet wird. Diese weisen Bohrungen 9a, 9b zur drehbeweglichen Lagerung einer Gurtaufwickelwelle 23 sowie eines seinerseits auf dieser Welle 23 gelagerten Antriebshandhebels 14 auf.

Mit der Gurtaufwickelwelle 23 wirkt ein Klinkenradgesperre 15 zusammen, welches einSperrad 20 und einen im Antriebshandhebel 14 verschieblich angeordnete Mitnehmerklinke 16 sowie eine im Rahmenteil 10 ebenfalls verschiebbar angeordnete Rücklauf-Sperrklinke 7 umfaßt.

Die Bohrungen 9a, 9b sind nach oben-außen zu mit einer teilkreisförmigen Führungskulisse 12a, 12b für die im Antriebshandhebel 14 verschiebbar angeordnete Mitnehmerklinke 16 ausgebildet.

Während es beim Stand der Technik - wie erwähnt - üblich ist und sich allgemein durchgesetzt hat, die beiden Seitenwangen 1a, 1b des Rahmenteils 10 einer Ratsche durch ein mit den Seitenwangen einstückig ausgebildetes Brückenelement U-förmig zu verbinden, ist in Abkehr von dieser Standard-Bauweise der Erfindungsgegenstand so ausgestaltet, daß die Seitenwangen 1a, 1b ohne Anordnung eines derartigen einstückigen Brückenelements durch wenigstens zwei mit den Seitenwangen 1a, 1b mehrstückig ausgebildete abstandshaltende Elemente 2, 3 miteinander zum Rahmenteil 10 starr verbunden sind.

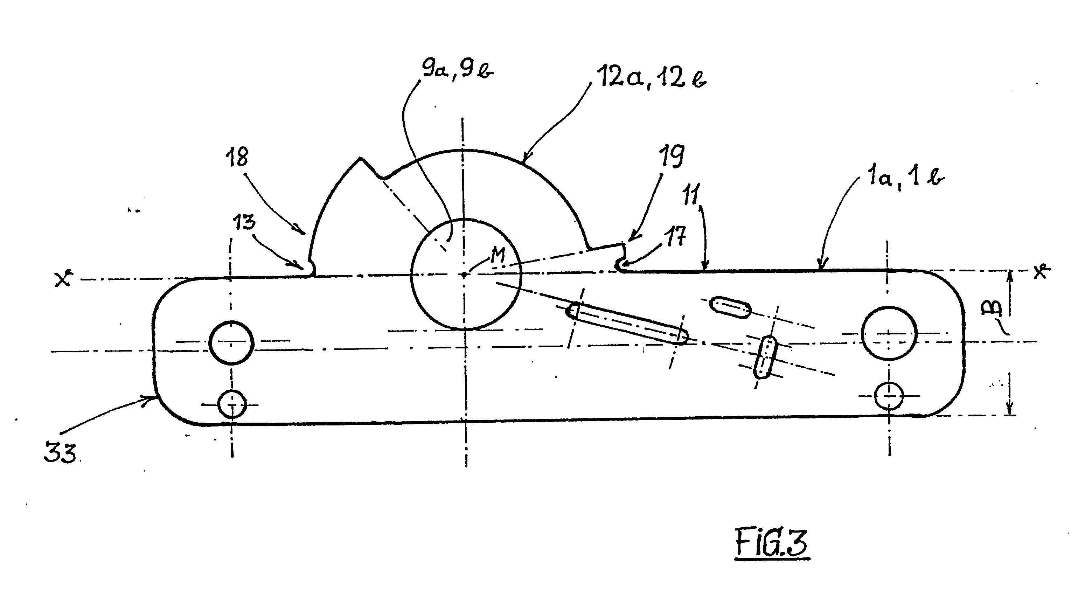

Wie hierzu die Zusammenschau der Figuren 1 und 3 erkennen läßt, sind infolge Weglassung des Brückenelementes die Seitenwangen 1a,1b in ihrer Formgebung besonders unkompliziert ausgebildet und bestehen im wesentlichen aus einem bandförmigen unteren Formteil 33 mit der einstückig die Bohrung 9a, 9b nach oben zu umgebenden Führungskulisse 12a, 12b.

Infolge des nicht vorhandenen Brückenelementes zwischen den Seitenwangen 1a, 1b kann nunmehr auch der Durchmesser des Sperrad-Hüllkreises erheblich größer ausgebildet sein, als dies bei bekannten Ratschen der Fall sein kann.

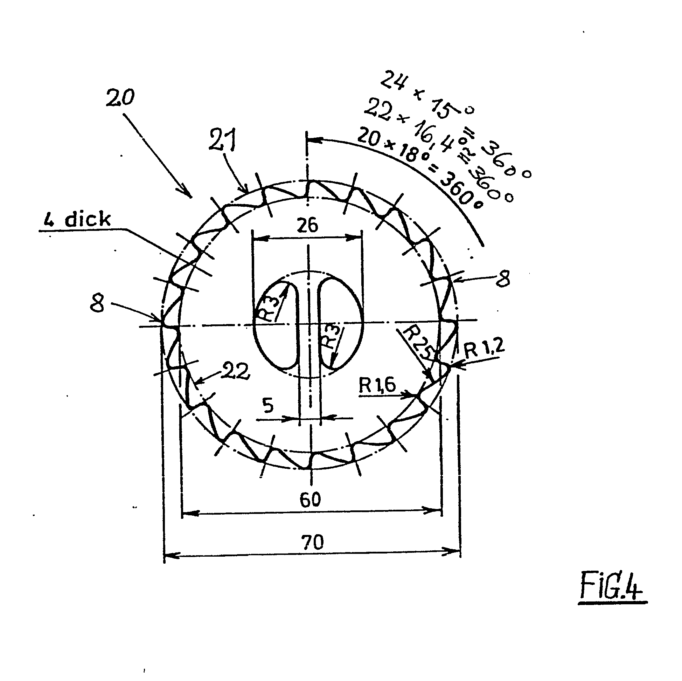

So entspricht beispielsweise der Durchmesser des Hüllkreises 20 (Fig. 4) der doppelten Breite = 2B des bandförmigen Formteils 33 einer Seitenwange 1a, 1b.

Ein weiterer gravierender und somit erfindungswesentlicher Vorteil ergibt sich weiter durch den Fortfall eines Brükkenelementes dadurch, daß nunmehr gemäß Darstellung in der Figur 1 ein schlaufenfreies Gurtende 32 auch von der die Rücklaufsperrklinke 7 aufweisenden Seite des Rahmenteils 10 in die Ratsche eingeführt und um die Gurtaufwickelwelle 23 nach Einführung in deren Schlitz aufgerollt werden kann.

Dies war bisher bei Vorhandensein eines U-förmigen Brückenelementes zwischen den Seitenwangen 1a, 1b des Rahmenteils 10 praktisch unmöglich.

Eine Ausgestaltung sieht weiter vor, daß die abstandshaltenden Elemente 2, 3 an den Seitenwangen 1a, 1b mittels Nietverbindungen 4, 5 befestigt sind.

Dies soll jedoch nicht ausschließen, daß einige dieser abstandshaltenden Elemente z. B. 3 als Schraubbolzen mit zwischen den Seitenwangen 1a, 1b eingelegten Abstandshaltern wie Röhrchen 34 ausgebildet sein können.

Weiter sieht eine erfindungswesentliche Ausgestaltung vor, daß die Seitenwangen 1a, 1b an beiden Enden 28, 29 Verbindungsbolzen 24, 25 aufweisen.

Auch diese Maßnahme dient dazu, daß wahlweise ein schlaufenloses Gurtende 32 beliebig von jedem der beiden Enden 28, 29 der Ratsche in diese eingeführt und am entgegengesetzten Ende jeweils das Gurtende 35 mit der Schlaufe angeschlossen werden kann, beziehungsweise umgekehrt.

Weiter sieht eine Ausgestaltung vor, daß unterhalb eines jeden Verbindungsbolzens 24, 25 jeweils ein zweiter dünnerer Bolzen 26,27 unter Bildung je eines Führungsschlitzes 30, 31 für die Gurtenden 32 bzw. 35 angeordnet ist, und zwar im parallelen Abstand.

Auch diese Maßnahme dient der freien Wahl der einzuführenden Gurtenden 32 bzw. 35 einmal von rechts (z. B. Fig. 1) oder ebenso von links oder umgekehrt.

Dabei ist zweckmäßig jeweils der Verbindungsbolzen 24, 25 im Durchmesser wesentlich größer als derjenige des zweiten Bolzens 26, 27 und etwa im mittleren Bereich der Breite "B" der Seitenwange 1a, 1b angeordnet, während die zweiten Bolzen 26, 27 im unteren Bereich der Seitenwangen 1a, 1b angeordnet sind.

Weiter sieht eine Ausgestaltung vor, daß ein abstandshaltendes Element 3 mit einer Führung 6 für die im Rahmenteil 10 verschiebbar angeordnete Rücklauf-Sperrklinke 7 ausgebildet ist.

Weiter sieht eine erfindungswesentliche Ausgestaltung vor, wobei das Sperrad 20 des Klinkenradgesperres 15 mit einseitig ausgerichteten Zähnen 8 ausgebildet ist, daß das Durchmesserverhältnis vom Hüllkreis 21 zum Fußkreis 22 der Zähne 8 zwischen 1,10 und 1,20 und vorzugsweise 1,16666 beträgt. Daraus resultiert ein Winkelabstand zwischen jeweils zwei benachbarten Zähnen 8a, 8b zwischen 15° und 18° (Figur 4).

Vorteilhaft ist weiterhin der Mittelpunkt "M" der Bohrung 9a, 9b zur Lagerung der Gurtwickelwelle 23 auf einer Linie x-x angeordnet (Figur 3), die im wesentlichen in Höhe der Oberkante 11 der Seitenwange 1a, 1b verläuft.

Infolge der so getroffenen Anordnung kann das Sperrad 20 im Vergleich zur Höhe der Ratsche einen wesentlich größeren Durchmesser erhalten, als dieser bisher bei den bekannten Ratschen üblich bzw. möglich war.

Damit ergibt sich weiterhin der erfindungswesentliche Vorteil, daß durch am größeren Umfang vermehrte Anzahl von Zähnen 8a, 8b usw. bei vergleichsweise unveränderter Zahnform bzw -tiefe der Winkelabstand von Zahn zu Zahn 8a, 8b gegenüber den bekannten Ausführungen von Ratschen bei ca. 33° auf 18° bzw. 15° verringert werden kann, und zwar ohne den Mehraufwand beispielsweise eines bekannten Doppelsperrklinken-Gesperres. Dadurch ergibt sich bei der Benutzung der Ratsche die Möglichkeit einer optimalen Spannleistung bei unkomplizierter Ausgestaltung der Ratsche.

Eine weitere Ausgestaltung sieht vor, wobei die Führungskulisse 12a, 12b an dem einen Ende 18 ihrer teilkreisförmigen Ausgestaltung eine Rastausnehmung 13 zur Festlegung des Antriebshandhebels 14 in der Neutralstellung bei entriegeltem Gesperre 15 der Gurtaufwickelwelle 23 mittels der in die Rastausnehmung 13 einrastbaren Mitnehmerklinke 16 aufweist, daß die Führungskulisse 12a, 12b am anderen Ende 19 ihrer teilkreisförmigen Ausbildung eine zweite Rastausnehmung 17 zur Festlegung des Antriebshandhebels 14 in seiner Antriebs-Endstellung aufweist.

Damit kann der Handhebel 14 in seinen beiden Endstellungen jeweils festgerastet werden, was in Anbetracht der erfindungsgemäß möglichen Richtungsumkehr der Ratsche in der Gurtlaufrichtung von wesentlichem Vorteil ist und die Sicherheit z. B. beim Transport erhöht.

Die Ratsche nach der Erfindung ist unkompliziert im Aufbau, in der Anschlußrichtung beliebig umkehrbar und ermöglicht infolge der besonderen Ausgestaltung des Sperrades und seiner Zahnteilung eine optimale Nutzung der Betätigungskraft bei ergonomisch besten Voraussetzungen.

Insofern kann von einer idealen Lösung der eingangs genannten Aufgabe gesprochen werden.


Liste der Bezugszeichen

1. Seitenwangen
2. Abstandshalter
3. Abstandshalter
4. Nietverbindung
5. Nietverbindung
6. Führung
7. Rücklaufsperrklinke
8. Zahn
9. Bohrung
10. Rahmenteil
11. Oberkante
12. Führungskulisse
13. Rastausnehmung (erste)
14. Antriebshandhebel
15. Gesperre
16. Mitnehmerklinke
17. Rastausnehmnung (zweite)
18. ein Ende der Kulisse
19. anderes Ende der Kulisse

20. Sperrad
21. Hüllkreis
22. Fußkreis
23. Gurtaufrollwickelwelle
24. Bolzen
25. Bolzen
26. zweiter Bolzen
27. zweiter Bolzen
28. ein Ende
29. anderes Ende
30. Führungsschlitz
31. Führungsschlitz
32. Gurt
33. bandförmiges Formteil
34. Rohrteil

35.    Gurtende

## Ansprüche

1. Ratsche zum Spannen insbesondere von Zurrgurten, mit einem Rahmenteil mit einem Paar üblicherweise zu beiden Seiten eines mit diesen einstückig ausgebildeten Brückenelementes im Abstand angeordneter Seitenwangen mit Bohrungen zur drehbeweglichen Lagerung einer einerseits mit einem schwenkbarenAntriebshandhebel und andererseits mit einem Klinkenradgesperre zusammenwirkenden Gurtaufwickelwelle mit Schlitz, wobei jede Lagerbohrung nach oben-außen zu mit einer teilkreisförmigen Führungskulisse für eine im Antriebshandhebel verschieblich angeordnete Mitnehmerklinke ausgebildet und im Rahmenteil eine ebenfalls verschieblich angeordnete Rücklauf-Sperrklinke vorhanden ist,
**dadurch gekennzeichnet,**
daß die Seitenwangen (1a, 1b) ohne Anordnung des einstückigen Brückenelementes durch wenigstens zwei mit den Seitenwangen (1a, 1b) mehrstückig ausgebildete abstandshaltende Elemente (2, 3) miteinander zum Rahmenteil (10) starr verbunden sind.

2. Ratsche nach Anspruch 1, dadurch gekennzeichnet, daß die abstandshaltenden Elemente (2, 3) an den Seitenwangen (1a, 1b) mittels Nietverbindungen (4, 5) befestigt sind.

3. Ratsche nach den Ansprüchen 1 und 2, dadurch gekennzeichnet, daß die Seitenwangen (1a, 1b) an beiden Enden (28, 29) Verbindungsbolzen (24, 25) aufweisen.

Ratsche nach einem der Ansprüche 1 bis 3, dadurch gekennzeichnet, daß unterhalb eines jeden Verbindungsbolzens (24, 25) jeweils ein zweiter Bolzen (26, 27) unter Bildung eines Führungsschlitzes (30, 31) für den Gurt (32) angeordnet ist, und zwar im parallelen Abstand.

5. Ratsche nach einem der Ansprüche 1 bis 4, dadurch gekennzeichnet, daß die Verbindungsbolzen (24, 25) im Durchmesser wesentlich größer als die zweiten Bolzen (26, 27) und etwa im Bereich der mittleren Breite der Seitenwangen (1a, 1b) angeordnet und die zweiten Bolzen (26, 27) im unteren Bereich derselben angeordnet sind.

6. Ratsche nach den Ansprüchen 1 und 2, dadurch gekennzeichnet, daß ein abstandshaltendes Element (3) mit einer Führung (6) für die im Rahmenteil (10) verschiebbar angeordnete Rücklaufsperrklinke (7) ausgebildet ist.

7. Ratsche nach einem der Ansprüche 1 bis 6, wobei das Sperrad (20) des Klinkenradgesperres (15) mit einseitig gerichteten Zähnen (8) ausgebildet ist, dadurch gekennzeichnet, daß das Durchmesserverhältnis vom Hüllkreis (21) zum Fußkreis (22) der Zähne (8) zwischen 1,10 und 1,20 und vorzugsweise 1,16666 beträgt.

8. Ratsche nach einem der Ansprüche 1 bis 7, dadurch gekennzeichnet, daß der Winkelabstand zwischen jeweils zwei benachbarten Zähnen (8a, 8b) zwischen 15 und 18 Winkelgrade beträgt.

9. Ratsche nach einem der Ansprüche 1 bis 8, dadurch gekennzeichnet, daß der Mittelpunkt (M) der Bohrung (9a, 9b) auf einer Linie (x-x) angeordnet ist, die im wesentlichen in Höhe der Oberkante (11) der Seitenwange (1a, 1b) verläuft.

10. Ratsche nach einem der Ansprüche 1 bis 9, wobei die Führungskulisse (12) an dem einen Ende (18) ihrer teilkreisförmigen Ausbildung eine Rastausnehmung (13) zur Festlegung des Antriebshandhebels (14) in der Neutralstellung bei entriegeltem Gesperre (15) der Gurtaufrollwickelwelle (23) mittels der in die Rastausnehmung (13) einrastbaren Mitnehmerklinke (16) aufweist, dadurch gekennzeichnet, daß die Führungskulisse (12) am anderen Ende (19) ihrer teilkreisförmigen Ausbildung eine zweite Rastausnehmung (17) zur Festlegung des Antriebshandhebels (14) in seiner Antriebs-Endstellung aufweist.

11. Ratsche nach einem der Ansprüche 1 bis 10, dadurch gekennzeichnet, daß der Durchmesser des Hüllkreises (21) vom Sperrad (20) der doppelten Breite (2 x B) einer Seitenwange (1a, 1b) entspricht.

Fig. 1

Fig.2

9a, 9b   12a, 12b

18   19   11   1a, 1b

13   17

X   M   X

B

33

FIG.3

EP 0 311 828 A2

**20**

**21**

4 dick

8

22

24 × 15° 
22 × 16,4° ≈ 360°
20 × 18° = 360°

26

8

R3

R3

R25

R 1,2

R 1,6

5

60

70

FiG.4

EP 0 311 828 A2